# EUROPÄISCHE PATENTSCHRIFT

(11) **EP 1 508 077 B1**
(45) Veröffentlichungstag und Bekanntmachung des Hinweises auf die Patenterteilung: **17.10.2007**
(21) Anmeldenummer: 03732403.5
(22) Anmeldetag: 17.05.2003
(51) Int. Cl.: G05D 16/20

(54) **PROPORTIONAL-DRUCKREGELVENTIL**
PROPORTIONAL PRESSURE CONTROL VALVE
SOUPAPE DE REGULATION DE PRESSION PROPORTIONNELLE

(30) Priorität: 24.05.2002 DE 10222936
(43) Veröffentlichungstag der Anmeldung: 23.02.2005
(73) Patentinhaber: ZF FRIEDRICHSHAFEN AG, 88038 Friedrichshafen (DE)
(72) Erfinder: GIERER, Georg, 88079 Kressbronn (DE); MAYR, Karlheinz, A-6900 Bregenz (AT); SCHMIDT, Thilo, 88074 Meckenbeuren (DE)
(86) Internationale Anmeldenummer: PCT/EP2003/005213
(87) Internationale Veröffentlichungsnummer: WO 2003/100540

(56) Entgegenhaltungen:
- DE-A- 4 324 589
- DE-A- 10 034 959
- DE-A- 19 732 933

## Beschreibung

Die vorliegende Erfindung betrifft ein Proportional-Druckregelventil zum Steuern einer Blende nach der im Oberbegriff von Anspruch 1 näher definierten Art.

Ein derartiges Ventil ist beispielsweise aus der Offenlegungsschrift DE 100 349 59 A1 der Anmelderin bekannt. Beschrieben ist ein Ventilteil mit Zu- und Ablauföffnungen und einem Schließmittel zum Steuern einer Blende. Der hydraulisch wirksame Querschnitt im Ventil wird hierbei durch die Größe der Blende und des Durchmessers des in die Blende eindringenden Teils bestimmt. Dabei wirkt die Blende in Verbindung mit dem in die Blende eindringenden Teil als Regeldrossel mit einem ringförmigen Querschnitt. Als Schließmittel wird insbesondere eine Kugel vorgeschlagen, welche bei geringen Anforderungen an die Genauigkeit der einzelnen Bauteile eine verhältnismäßig hohe Dichtigkeit gewährleistet.

Auch eine weitere Offenlegung zeigt ein Druckregelventil mit einem kegelförmigen Schließelement zwischen einer Zulauföffnung und einer Ablauföffnung. Dieses Schließmittel ragt dabei, je nach Beaufschlagung, durch das Betätigungselement unterschiedlich weit in die Bohrungen hinein. Die Bohrungen stellen hydraulisch wirksame Drosselblenden dar. Durch ein Betätigungsmittel wird das Schließelement so axial verschoben, dass es unterschiedlich weit in die Drosselblenden hineinragen kann. Durch die Kegelform des Schließmittels ändert sich dabei der hydraulische Durchmesser der beiden Drosselblenden in Abhängigkeit des Verschiebeweges.

Nachteilig im beschriebenen Stand der Technik ist zum einen der ringförmige Drosselquerschnitt, welcher kritische Toleranzen aufweist und über einen kleinen hydraulischen Durchmesser verfügt, und zum anderen der Öffnungsquerschnitt der Kugel bzw. des Kegels mit einer Drossellänge, die von dem Öffnungsweg abhängig ist. Beide Faktoren führen bei niederen Temperaturen aufgrund der angestiegenen Viskosität des hydraulischen Arbeitsmediums zu Dynamikproblemen im Ventil.

Der vorliegenden Erfindung liegt die Aufgabe zugrunde das dynamische Verhalten eines Proportional-Druckregelventils bei niederen Temperaturen in der Weise zu verbessern, dass die Steuerung und Regelung mit dem Proportional-Druckregelventil über dessen gesamten Arbeitsbereich eine kontinuierliche gute Qualität aufweist.

Die der Erfindung zugrunde liegende Aufgabe wird durch ein die Merkmale des Hauptanspruchs aufweisendes, gattungsgemäßes Proportional-Druckregelventil gelöst.

Das Proportional-Druckregelventil weist ein Ventilteil mit einer im Ventilgehäuse integrierten Zulauföffnung auf. Durch diese Zulauföffnung strömt das hydraulische Arbeitsmedium in einen Raum des Ventilteils ein, welcher eine weitere Öffnung in Form einer Blende aufweist.

Ein Schließmittel steuert die Blende und reguliert damit die Durchflußmenge des hydraulischen Arbeitsmediums. Betätigt wird das Schließelement durch ein Betätigungselement, welches durch die Blende hindurch in den Raum des Ventilteils hineinragt.

Der hydraulisch wirksame Querschnitt ist in der Zulauföffnung realisiert und die Zulauföffnung wirkt als Drossel.
Damit steigen die konstruktiven Gestaltungsmöglichkeiten für die Drossel in erheblichen Umfang. Beispielsweise ist es einfach möglich für den hydraulisch wirksamen Querschnitt die günstigste Form zu wählen. Von einem Kreisring als Drosselquerschnitt, welcher die negativen Eigenschaften bei niederen Temperaturen aufweist, kann problemlos auf einen hydraulisch günstigeren Drosselquerschnitt wie beispielsweise einen Kreis übergegangen werden. Der Grund für das hydraulisch günstige Verhalten einer Drossel mit einem kreisförmigen Querschnitt gegenüber einer Drossel mit einem kreisringförmigen Querschnitt liegt an den unterschiedlichen hydraulischen Durchmessern. Der hydraulische Durchmesser hängt von der vom hydraulischen Arbeitsmedium benetzten Oberfläche ab. Bei einem kreisringförmigen Querschnitt ist die benetzte Oberfläche aufgrund der inneren Begrenzung größer als bei einem Kreis. Die Größe der benetzten Oberfläche verhält sich umgekehrt zu der Größe des hydraulischen Durchmessers. Der hydraulische Durchmesser bei einem kreisringförmigen Querschnitt ist somit kleiner als bei einem kreisförmigen Querschnitt.
Ein kleiner hydraulischer Durchmesser bewirkt bei niederen Temperaturen eine laminare Strömung, welche logarithmisch in die temperaturabhängige Viskosität des hydraulischen Arbeitsmediums eingeht. Hingegen bewirkt ein großer hydraulischer Durchmesser bei niederen Temperaturen eine turbulente Strömung, die in erster Linie von der Dichte des hydraulischen Arbeitsmediums abhängig ist und die nur linear in die temperaturabhängige Viskosität des hydraulischen Arbeitsmediums eingeht.

Ein größerer hydraulischer Querschnitt bewirkt demzufolge eine höhere Temperaturunabhängigkeit des hydraulischen Arbeitsmediums.

Erfindungsgemäß ist die der Blende zugewandte Fläche des Schließmittels nur in ihren äußeren Bereichen zur Auflage an der Blende führbar. Somit ist das Schließmittel derart ausgebildet, dass der äußere Umfang der zur Blende zugewandten Seite eine genau definierbare Fläche bei geschlossenem Schließmittel einschließt. Diese erfindungsgemäße Ausführung des Schließmittels ermöglicht vorteilhafterweise eine genaue Ermittlung der entstehenden Kräfte am Schließmittel. Damit läßt sich beispielsweise eine Feder zum Schließen des Schließmittels entsprechend dimensionieren.

Die erfindungsgemäße Anordnung der Zulauföffnung im Ventilteil erzielt den weiteren Vorteil, ein für die Betätigung des Schließmittels günstiges Druckniveau zu erzeugen.

Die Zulauföffnung ist demzufolge derart angeordnet, daß die Fließrichtung des durch die Zulauföffnung strömenden hydraulischen Arbeitsmediums senkrecht zur Axialachse des Schließmittels steht. Damit ist gewährleistet, daß im geschlossenen Zustand hauptsächlich radiale Kräfte auf das Schließmittel wirken. Somit kann vorteilhaft auf sogenannte Strahlumlenker im Ventilteil verzichtet werden.

Wird nun aus dem geschlossenen Zustand des Ventils mittels dem Betätigungselement das Schließelement geöffnet, müssen im Vergleich zu den üblichen Ausführungen von Proportional-Druckventilen, wesentlich geringere axiale hydrodynamische und hydrostatische Gegenkräfte überwunden werden. Dies bewirkt eine vom Zulaufdruck unabhängige Kennlinie des Proportional-Druckreglers, wodurch ein üblich vorgeschaltetes Druckreduzierventil für Druckregler entfallen kann.

Das Betätigungselement ist nicht mit dem Schließmittel fest verbunden. Es übt lediglich eine axiale Kraft auf das Schließelement während dessen Öffnen aus. Die axiale Gegenkraft, welche aufgebracht werden muß, um das wieder Schließelement zu schließen wird entweder mechanisch, beispielsweise mit einer Feder oder hydraulisch aufgebracht. Diese Schließmechanismen werden in den Ausführungsbeispielen detailliert beschrieben.

Optional kann das Betätigungselement während seiner axialen Bewegung in einer reibschlüssigen Vertiefung des Schließelementes eintauchen und erfährt dadurch vorteilhaft eine radiale Lagerung. Die radiale Lagerung des Betätigungselementes in dem Schließelement ersetzt dann eine zusätzlich erforderliche Lagerung des Betätigungselementes innerhalb des Proportional-Druckregelventils. Damit können Material- und Herstellkosten und auch das Gewicht des Proportional-Druckregelventils reduziert werden.

Ein weiterer Vorteil der Erfindung ergibt sich aus der losen Verbindung von dem Betätigungselement und dem Schließmittel. Während in bekannten Ausführungen von Ventilteilen der Proportional-Druckregelventil die Ablagerungen von Schmutzpartikeln zwischen dem Gehäuse und dem Schließmittel zu Funktionseinschränkungen des Ventils führen, ist die erfindungsgemäße Ausbildung des Ventilteils schmutzunabhängig. Das Betätigungselement in der erfindungsgemäßen Ausbildung des Ventilteils ist nahezu widerstandslos bewegbar, selbst wenn das Schließmittel aufgrund angelagerter Schmutzpartikel klemmen sollte.

Des weiteren ist das Proportional-Druckregelventil wie in DE 100 349 59 A1 ausgeführt. DE 100 349 59 A1 wird somit zur Offenbarung der Erfindung herangezogen.

Weitere vorteilhafte Ausgestaltungen der Erfindung ergeben sich aus der nachfolgenden Beschreibung der Ausführungsbeispiele, die in den Figuren näher dargestellt sind.
Es zeigen:
- Fig. 1: eine Schnittdarstellung des Ventilteils des erfindungsgemäßen Proportional-Druckregelventils mit offenem und geschlossenem Schließmittel, welches mechanisch mittels einer Feder geschlossen wird;
- Fig. 2: eine Schnittdarstellung des Ventilteils des erfindungsgemäßen Proportional-Druckregelventils mit offenem und geschlossenem Schließmittel, welches hydraulisch geschlossen wird.

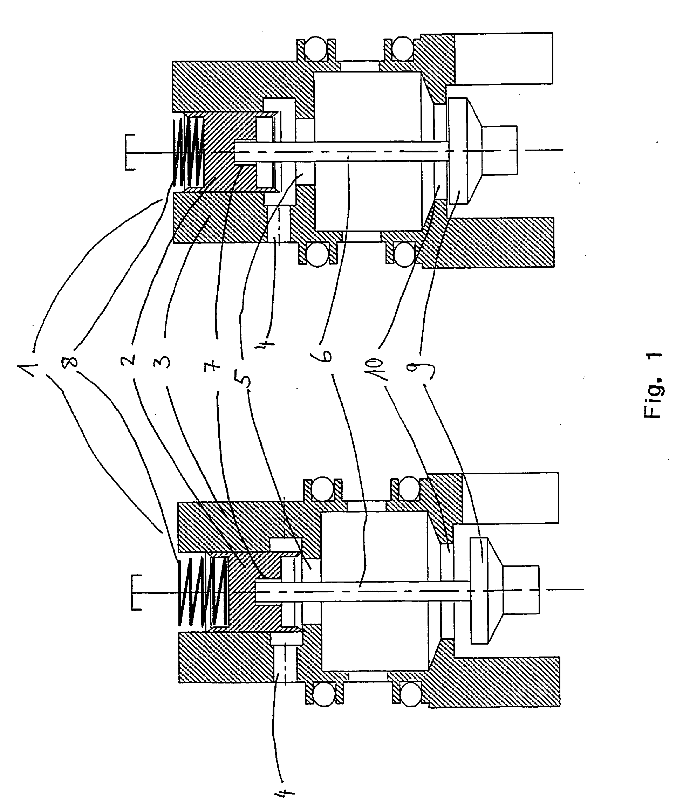

Fig. 1 zeigt das erfindungsgemäße Ventilteil 1 in Schnitt-Darstellung links in geöffneter Schaltposition mit geschlossenem Schließmittel und rechts in geschlossener Schaltposition mit geöffnetem Schließmittel.

Es ist eine Zulauföffnung 4 gezeigt, welche in dem Ventilgehäuse 3 integriert ist. In dem Ventilgehäuse 3 ist weiterhin ein Schließmittel 2 integriert, welches reibschlüssig in axialer Richtung des Ventilteils 1 führbar ist. Die Längsachse der Zulauföffnung 4 steht senkrecht zur Längsachse des Schließmittels 2. Dies hat zur Folge, wie die linke Schnitt-Darstellung verdeutlicht, daß das Schließmittel 2 im geschlossenen Zustand ausschließlich an seinen Seitenflächen vom hydraulischen Arbeitsmedium umströmt wird. Es wirkt also durch das hydraulische Arbeitsmedium keine axiale Kraft auf das Schließmittel 2. Die axialen Krafteinwirkungen auf das Schließmittel 2 entstehen einmal durch eine Feder 8, welche tankseitig in axialer Richtung an dem Schließmittel 2 anliegt und einmal durch das Betätigungselement 6. Das Betätigungselement 6 ist mit dem Anker des Proportional-Druckregelventils fest verbunden. Es ragt durch die Blende hindurch und taucht in eine Vertiefung des Schließmittels 7 ein. Die Vertiefung des Schließmittels 7 ist relativ zum Betätigungselement 2 reibschlüssig dimensioniert und stellt damit eine radiale Lagerung für das Betätigungsmittel 2 dar. Aus diesem Grund kann auf eine weitere radiale Lagerung für das Betätigungselement 2, beziehungsweise Anker im Proportional-Druckregelventil verzichtet werden.

Während eines Schließvorganges des Ventilteils 1 bewegen magnetische Kräfte den mit dem Betätigungsmittel 6 verbundenen Anker, so daß der Flachsitz 9 am Sitzventil 10 zur Anlage kommt. Dabei öffnet das Betätigungselement 6 gleichermaßen das Schließmittel 2 entgegen der Federkraft. In umgekehrter Richtung entfällt die axiale Druckkraft des Betätigungselementes 6 und die Feder 8 bewirkt das Schließen des Schließmittels 2.

Das Schließmittel 2 ist derart ausgebildet, daß der äußere Umfang der zur Blende 5 zugewandten Seite eine genau definierbare Fläche bei geschlossenem Schließmittel 2 einschließt. Diese erfindungsgemäße Ausführung des Schließmittels 2 ermöglicht eine genaue Ermittlung der entstehenden Kräfte am Schließmittel 2. Damit läßt sich die Feder 8 entsprechend günstig dimensionieren.

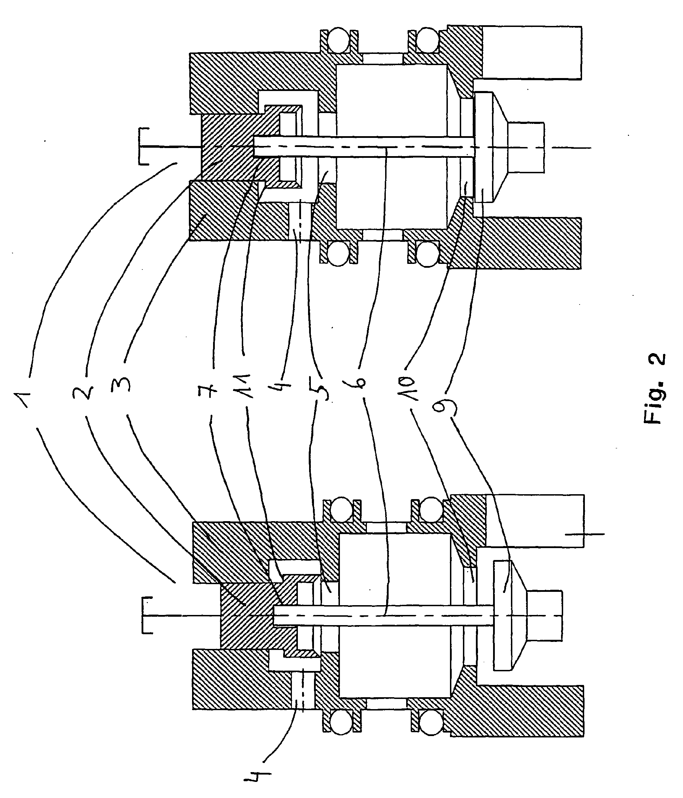

In Fig. 2 ist das Ausführungsbeispiel der Erfindung gegenüber dem Ausführungsbeispiel aus Fig. 1 derart abgeändert, daß der Schließvorgang des Schließmittels 2 nicht durch eine Feder 8 sondern hydraulisch erfolgt.

Das Schließmittel 2 verfügt über eine Differenzfläche 11. Die Differenzfläche 11 ergibt sich aus der Verminderung des Außenumfanges des Schließmittel 2. Dabei entsteht eine zur blendenseitigen Anlagefläche des Schließmittels 2 parallele freie Fläche, die durch das hydraulische Arbeitsmedium ständig umspült wird. Auf die Differenzfläche 11 wirkt eine hydraulische Kraft, welche ausreichend ist, das Schließmittel zu schließen, sobald die axiale Druckkraft von dem Betätigungsmittel auf das Schließmittel 2 reduziert wird.

### Bezugszeichen

- 1: Ventilteil
- 2: Schließmittel
- 3: Ventilgehäuse
- 4: Zulauföffnung
- 5: Blende
- 6: Betätigungselement
- 7: reibschlüssige Vertiefung
- 8: Feder
- 9: Flachsitz
- 10: Sitzventil
- 11: Differenzfläche

## Patentansprüche

1. Proportional-Druckregelventil mit
- einem Ventilteil (1) mit Zu (4) - und Ablauföffnungen und wenigstens einem Schließmittel (2) zum Steuern einer Blende (5) an einer der Öffnungen und einem hydraulisch wirksamen Querschnitt für die Regulierung der Durchflussmenge des hydraulischen Arbeitsmediums,
- einem Magnetteil mit einem Magnetkern, einer Magnetspule und einem verschiebbar angeordneten Magnetanker und
- einem mit dem Anker zusammenwirkenden Betätigungselement (6), welches das Schließmittel (2) betätigt, wobei das Betätigungsmittel (2) und/oder der Magnetanker im Magnetteil gelagert ist,
- wobei der hydraulisch wirksame Querschnitt in Durchflussrichtung des hydraulischen Arbeitsmediums vor dem Schließmittel (2) angeordnet ist,
**dadurch gekennzeichnet, dass** die der Blende (5) zugewandte Fläche des Schließmittels (2) nur in seinen äußeren Bereichen zur Auflage an der Blende (5) führbar ist.

2. Proportional-Druckregelventil nach Anspruch 1, **dadurch gekennzeichnet, dass** der hydraulisch wirksame Querschnitt als Zulauföffnung (4) im Ventilteil (1) ausgebildet ist.

3. Proportional-Druckregelventil nach einem der vorhergehenden Ansprüche, **dadurch gekennzeichnet, dass** die Zulauföffnung (4) derart im Ventilteil (1) ausgebildet ist, dass die Fließrichtung eines durch die Zulauföffnung (4) strömenden hydraulischen Arbeitsmediums senkrecht zur Axialachse des Schließmittels (2) steht.

4. Proportional-Druckregelventil nach einem der vorhergehenden Ansprüche, **dadurch gekennzeichnet, dass** das Schließmittel (2) durch das Betätigungselement (6) axial geführt ist.

5. Proportional-Druckregelventil nach einem der vorhergehenden Ansprüche, **dadurch gekennzeichnet, dass** die Verbindung zwischen dem Schließmittel (2) und dem Betätigungselement (6) lose ist.

6. Proportional-Druckregelventil einem der vorhergehenden Ansprüche, **dadurch gekennzeichnet, dass** das Betätigungselement (6) und der Magnetanker eine einzige radiale Lagerung in dem Schließmittel (2) aufweist.

7. Proportional-Druckregelventil nach einem der vorhergehenden Ansprüche, **dadurch gekennzeichnet, dass** im Schließmittel (2) eine Vertiefung (7) ausgebildet ist, in der das Schließmittel (2) eintaucht und dadurch radial gelagert wird.

8. Proportional-Druckregelventil nach den Ansprüchen 1 bis 7, **dadurch gekennzeichnet, dass** das Schließmittel (2) eine Differenzfläche (11) aufweist, auf der eine Druckkraft wirkt, welche durch das hydraulische Arbeitsmedium erzeugt wird und welche den Schließvorgang des Schließmittels (2) bewirkt.

9. Proportional-Druckregelventil nach den Ansprüchen 1 bis 8, **dadurch gekennzeichnet, dass** sich die Differenzfläche (11) aus einer Querschnittsverkleinerung des Schließmittels (2) innerhalb des mit dem hydraulischen Arbeitsmedium befüllten Raumes ergibt.

10. Proportional-Druckregelventil nach den Ansprüchen 1 bis 7, **dadurch gekennzeichnet, dass** eine Feder (8) in axialer Richtung an dem Schließelement (2) anliegt, welche den Schließvorgang des Schließmittels (2) bewirkt.

11. Proportional-Druckregelventil nach einem der vorhergehenden Ansprüche, **dadurch gekennzeichnet, dass** die der Blende (5) zugewandte Fläche des Schließmittels (2) in seinen äußeren Bereich derart ausgebildet ist, dass eine definierte eingeschlossene Fläche bestimmbar ist, welche äquivalent zu Ventilfunktion bestimmenden Kräften ist.

## Claims

1. Proportional pressure control valve, comprising
- a valve part (1) with inlet (4) and outlet ports and at least one closing means (2) for controlling an aperture (5) on one of the ports, and a hydraulically effective cross section for regulating the rate of flow of the hydraulic working medium,
- a magnet part with a magnet core, a magnet coil and a displaceably arranged magnet armature, and
- an actuating element (6) cooperating with the armature, which actuating element (6) actuates a closing means (2), the actuating means (2) and/or the magnet armature being supported in bearings in the magnet part, and
- the hydraulically effective cross section being arranged before the closing means (2) in the flow direction of the hydraulic working medium,
**characterised in that** only the outer regions of the face of the closing means (2) oriented towards the aperture (5) are guidable for abutment against the aperture (5).

2. Proportional pressure control valve according to Claim 1, **characterised in that** the hydraulically effective cross section is in the.form of an inlet port (4) in the valve part (1).

3. Proportional pressure control valve according to either of the preceding claims, **characterised in that** the inlet port (4) is so configured in the valve part (1) that the flow direction of a hydraulic working medium flowing through the inlet port (4) is disposed perpendicularly to the axial axis of the closing means (2).

4. Proportional pressure control valve according to any one of the preceding claims, **characterised in that** the closing means (2) is driven axially by the actuating element (6).

5. Proportional pressure control valve according to any one of the preceding claims, **characterised in that** the connection between the closing means (2) and the actuating element (6) is non-integral.

6. Proportional pressure control valve according to any one of the preceding claims, **characterised in that** the actuating element (6) and the magnet armature have a single radial bearing in the closing means (2).

7. Proportional pressure control valve according to any one of the preceding claims, **characterised in that** a recess (7) is formed in the closing means (2), into which recess (7) the closing means (2) penetrates and is supported radially in a bearing thereby.

8. Proportional pressure control valve according to claims 1 to 7, **characterised in that** the closing means (2) has a differential area (11) on which a pressure force generated by the hydraulic working medium acts and which effects the closing operation of the closing means (2).

9. Proportional pressure control valve according to claims 1 to 8, **characterised in that** the differential area (11) is produced by a reduction in the cross section of the closing means (2) inside the chamber filled with the hydraulic working medium.

10. Proportional pressure control valve according to claims 1 to 7, **characterised in that** a spring (8) which effects the closing operation of the closing means (2) bears against the closing element (2) in the axial direction.

11. Proportional pressure control valve according to any one of the preceding claims, **characterised in that** the face of the closing means (2) oriented towards the aperture (5) is so configured in its outer regions that a defined enclosed area, which is equivalent to forces determining a valve function, can be determined.

## Revendications

1. Soupape de régulation de pression proportionnelle, comprenant :
- une partie soupape (1) comprenant des ouvertures d'arrivée (4) et de départ et au moins un moyen obturateur (2) servant à commander un diaphragme (5) au niveau d'une des ouvertures, et présentant une section hydraulique efficace pour la régulation du débit du milieu travaillant hydraulique,
- une partie magnétique comportant un noyau magnétique, une bobine magnétique et une armature magnétique coulissante, et
- un élément d'actionnement (6) coopérant avec l'armature, qui actionne le moyen obturateur (2), le moyen d'actionnement (2) et/ou l'armature magnétique étant placés dans la partie magnétique,
- dans laquelle la section hydraulique efficace est disposée en amont du moyen obturateur (2) dans le sens de l'écoulement du milieu travaillant hydraulique,
**caractérisée en ce que** la surface du moyen obturateur (2) dirigée vers le diaphragme (5) peut être placée en appui sur le diaphragme (5) seulement dans ses régions extérieures.

2. Soupape de régulation de pression proportionnelle selon la revendication 1, **caractérisée en ce que** la section hydraulique efficace est constituée par une ouverture d'arrivée (4) prévue dans la partie soupape (1).

3. Soupape de régulation de pression proportionnelle selon l'une des revendications précédentes, **caractérisée en ce que** l'ouverture d'arrivée (4) est formée dans la partie soupape (1) de telle manière que la direction de l'écoulement d'un fluide travaillant hydraulique qui passe à travers l'ouverture d'arrivée (4) soit perpendiculaire à l'axe axial du moyen obturateur (2).

4. Soupape de régulation de pression proportionnelle selon l'une des revendications précédentes, **caractérisée en ce que** le moyen obturateur (2) est guidé axialement par l'élément d'actionnement (6).

5. Soupape de régulation de pression proportionnelle selon l'une des revendications précédentes, **caractérisée en ce que** la liaison entre le moyen obturateur (2) et l'élément d'actionnement (6) est libre.

6. Soupape de régulation de pression proportionnelle selon l'une des revendications précédentes, **caractérisée en ce que** l'élément d'actionnement (6) et l'armature magnétique comportent une seule portée radiale dans le moyen obturateur (2).

7. Soupape de régulation de pression proportionnelle selon l'une des revendications précédentes, **caractérisée en ce que**, dans le moyen obturateur (2), est formé un creux (7) dans lequel le moyen obturateur (2) plonge et est ainsi supporté radialement.

8. Soupape de régulation de pression proportionnelle selon les revendications 1 à 7, **caractérisée en ce que** le moyen obturateur (2) comporte une surface différentielle (11) sur laquelle agit une force de pression qui est produite par le milieu travaillant hydraulique et qui provoque le processus de fermeture du moyen obturateur (2).

9. Soupape de régulation de pression proportionnelle selon les revendications 1 à 8, **caractérisée en ce que** la surface différentielle (11) est créée par un rétrécissement de la section du moyen obturateur (2) à l'intérieur de la chambre remplie du milieu travaillant hydraulique.

10. Soupape de régulation de pression proportionnelle selon les revendications 1 à 7, **caractérisée en ce qu**'un ressort (8) est adjacent à l'élément obturateur (2) dans la direction axiale et provoque le processus de fermeture du moyen obturateur (2).

11. Soupape de régulation de pression proportionnelle selon l'une des revendications précédentes, **caractérisée en ce que** la surface du moyen obturateur (2) dirigée vers le diaphragme (5) est conformée dans sa région extérieure de manière que puisse être déterminée une surface enfermée définie qui est équivalente aux forces qui déterminent la fonction de soupape.
